Europäisches Patentamt

European Patent Office

Office européen des brevets

(19)

(11) Publication number: **0 143 562**
A1

## (12) EUROPEAN PATENT APPLICATION

(21) Application number: 84307536.7

(22) Date of filing: 01.11.84

(51) Int. Cl.⁴: **H 01 M 4/02,** H 01 M 6/14,
H 01 M 6/10, H 01 M 2/14

(30) Priority: 02.11.83 GB 8329208
15.12.83 GB 8333384

(43) Date of publication of application: 05.06.85
Bulletin 85/23

(84) Designated Contracting States: AT BE CH DE FR GB IT
LI NL SE

(71) Applicant: RAYCHEM LIMITED, Rolls House 7, Rolls
Buildings Fetter Lane, London, EC4 1NL (GB)

(72) Inventor: McLoughlin, Robert Hamilton, 45 Wessex Way,
Swindon Wiltshire (GB)
Inventor: Park, George Barry, 38 Restrop View, Purton
Nr. Swindon Wiltshire (GB)
Inventor: Cook, John Anthony, 18 Beech Close Orchard
Hill, Faringdon Oxfordshire (GB)

(74) Representative: Jay, Anthony William et al, Raychem
Limited Intellectual Property Law Department Faraday
Road, Dorcan Swindon Wiltshire (GB)

(54) Electrode article.

(57) Electrode material for electrochemical cells, preferably
lithium strip for non-aqueous lithium cells, has adhered to it
a porous protective material and may be in a form suitable for
feeding to automatic assembly equipment and/or may have
been deformed while thus protected to reduce its thickness,
e.g. below 0.25 millimetres.

0143562

This invention relates to protected electrode materials and the use thereof in electrical devices

Some electrical components, for example some electrode materials, are sensitive insofar as they are difficult to handle during manufacture of electrical devices owing to physical weakness or high chemical reactivity, which may necessitate inconvenient handling procedures and/or special conditions such as dry room assembly. Examples of such sensitive materials include alkali metals and alkaline earth metals, notably lithium metal electrodes for lithium cells. In such cells, the lithium anode and a suitable cathode are assembled with a porous polymeric electrode separator layer, for example microporous polypropylene.

Lithium metal is difficult to roll into thin strips for use as an electrode, and U.S. Patent No. 3721113 describes a method of alleviating this difficulty by rolling the lithium between smooth (surface asperities less than one micron) polymeric surfaces having sufficiently low critical surface tension to prevent adhesion to the lithium. The polymer may be a coating on the surface of rolls used to roll the lithium, or may be in the form of sheeting enclosing or facing the lithium, which does not adhere to the lithium and is peeled off the lithium strip after rolling. While this method facilitates the rolling operation, which produces the thin lithium strip, it does not improve the efficiency of assembling the delicate lithium strip into electrical devices.

Numerous variations of the materials and structure of individual cell electrodes have previously been described, with the emphasis on the chemical and electrical performance of the materials and with little attention to the assembly process itself. For example, British Patent No. 1533279 describes the use of an adherent thin coating of a vinyl polymer film on the surface of lithium strip electrodes for lithium/thionyl chloride cells to prevent electrode passivation, which tends to occur on storage of that particular kind of cell. The vinyl polymer film is insoluble in the thionyl chloride and must not be degraded or decomposed in the presence of the same. It must be sufficiently thin to permit ion transfer between the lithium and the thionyl chloride as required for current flow in operation of the cell. It is stated, though not demonstrated in the examples of the patent, that the vinyl polymer film may also serve as the sole electrode separator of the cell or may permit the use of a thinner separator than would normally be required. Somewhat thicker films of the vinyl polymer are recommended for that purpose, but it is made clear that the ion transfer needed for acceptable electrical performance of the cell will be adversely affected by thus increasing the film thickness. Electrode separators of polystyrene are described in U.S. Patent No. 4,315,602 for alkaline cells, the separators again being necessarily thin enough to permit ion transfer. U.S. Reissue Patent No. 22065 describes the use of thin porous polymer coatings on metal electrode plates for aqueous cells. The coating merely replaces the standard porous electrode separator sheet, and it is emphasised that the coating must be thin in order to be sufficiently porous.

The present invention provides articles whereby significant improvements in electrical device assembly processes can be achieved, as hereinafter described.

The invention provides an article comprising continuous metal electrode material having adhered to at least part of its surface a flexible layer of porous protective material, wherein the layer is ready to function as an electrode separator when the article is used to provide an electrode in an electrical device, and the article is in a form suitable for feeding to automatic equipment capable of assembling the said device.

The porous, flexible electrode separator layers of the present invention may be sufficiently thick to survive mechanical deformation of the protected electrode material. This has the advantage that the flexible protective layer permits the development of assembly processes which conveniently include the step of deforming the sensitive electrode materials while protected by the protective material, for example to reduce the thickness of the electrode material, and/or the step of arranging it in a desired form such as a curved or coiled cell electrode, as will be further described hereinafter. The invention accordingly includes an article comprising sensitive electrode material protected by a flexible layer of porous protective material, the electrode material having been deformed so as to increase its surface area while in contact with the protective material and the layer of protective material being ready to function as an electrode separator when the article is used to provide an electrode in an electrical device.

The realisation that the protective material can be used to help the sensitive electrode material t withstand the stresses of automated assembly thus leads to important processing advantages. The protective layers may have suitable adhesion-promoting surface properties, such as surface asperities greater than on micron. The feedable article is preferably in the form of an elongate strip of sufficient length to make a plurality of the said electrical devices.

The layer of protective material will preferably be able to survive mechanical deformation of the electrode material in the sense that it will retain its integrity and maintain a useful degree of protection both against mechanical damage and against contamination of the electrode material after a significant amount of deformation, for example for the aforementioned purposes. The amount of deformation which the protective material will preferably survive will be a matter of commonsense for practical readers.

Brittle layers which would crack so as to reduce the protection unacceptably are thus undesirable, as are materials which would react unacceptably in other ways to such treatment, for example very thin layers which would become unacceptably scuffed or torn.

The statement that the protective material is "ready to function" as an electrode separator will be understood to mean that the protective material is porous (which term as used herein includes microporous) to an extent allowing it to be sufficiently permeated by electrolyte liquid present in the electrical device in use. The time required for permeation in practice will be controllable by suitable selection of protec tive materials, pore sizes and permeating fluids to suit specific end uses. Non-woven fabrics could be used as the protective material, although porous polymer films are preferred.

The protective layer may be applied to the electrode material by any convenient method, preferably as a continuous process, for example by pressure lamination using an already porous polymer film; or by solvent coating under conditions which will produce a suitably porous coating; or by melt extrusion e.g. with a suitable blowing agent, which is thought to be a new and useful advance in the field of electrode materials.

It is an advantage of the present invention that even the more porous materials will provide a degree of protection against contamination of the electrode material. This is especially advantageous in connection with electrode materials which may react violently with certain contaminants, for example alkali metals with water, since the protective material will reduce the likelihood of violent reaction.

The protective material may thus act as an electrode separator, pre-assembled with the electrode material, thus eliminating some of the problems of handling and aligning electrodes and separators during the assembly of the electrical devices, and facilitating automated processing. The protective material may be deformed, e.g. stretched, while in contact with the electrode material so as to enhance its function as an electrode separator.

It will be understood that the sensitive material may require protection for various reasons, for exampl materials which are subject to attack by atmospheric gases or moisture during storage; materials which may react prematurely with liquid with which they may come into contact during assembly materials which are subject to poisoning by contaminants during storage; and materials which lack physical strength or integrity (e.g. have lower tensile strength than an equal thickness of the protective material) and thus require protection from physical damage. The invention is especially useful for materials which require physical protection owing to physical weakness while permitting access of fluids to the material in use. By suitable selection of its ingredients, the protective material can also be made to perform other secondary functions, for example providing chemical reactants or catalysts in a porous layer on the surface of the sensitive material.

If desired, the porous protective material may have an overlying removable layer of relatively fluid-impermeable material to provide extra protection, the removable material being the same as, or different from, the underlying protective material and preferably being a substantially non-porous film (e.g. Saran), which will be removed prior to assembly of the article in an electrical device.

It is a further advantage of the present invention that the electrode article may be provided in a form, preferably a long, continuous strip, for feeding to equipment capable of assembling successive portions of the article into a succession of the electrical devices as aforesaid, preferably automatically and continuously. The advantages of such an automated process over the piece-by-piece hand assembly methods hitherto used in the absence of the articles according to this invention, especially for alkali metal or alkalin earth metal electrode materials, will be appreciated.

The articles according to this invention can b assembled with the opposing electrode material and other components of the electrical device with fewer difficulties than are encountered in handling and aligning unprotected electrode materials, especially reactive metals such as alkali metals or alkaline earth metals. The anode or the cathode, or both, of suitable electrical devices, for example electrical cells, especially non-aqueous cells, may be provided by way of articles according to this invention, reactive metal anodes, especially lithium anodes, for non-aqueous electrical cells being an important practical application of the articles. The articles may include other components, for example current collector layers, as known per se, on part of the electrode material, e.g. on one major surface of a flat strip electrode. Such current collector layers may be overlaid by insulating material such as the protective electrode separator material of the present invention, or may themselves serve as a protective layer on one side of the electrode, with the porous layer only on the opposite side. Other arrangements may be contemplated to suit other additional components incorporated in the articles of this invention.

This invention is especially useful in relation to reactive metal electrodes for non-aqueous cells, such as alkali metal or alkaline earth metal electrodes, especially lithium electrodes for lithium cells. Production of thin sheet electrodes of these and othe materials can be facilitated by deforming the electrod material, for example by rolling, while in contact with the layer of protective material so as to decrease th thickness of the electrode material or otherwise increase its surface area, e.g. by altering its surface configuration. In this way, thin sheets of lithium, for example of about 0.075 millimetres thickness, which would otherwise be difficult and expensive to make and handle, can be produced from more readily available 0.25 millimetre strip. The electrode material will preferably be malleable under temperatures and pressures which do not unacceptably damage the protective layer.

The invention includes electrodes for electrical devices formed of the protected electrode articles, and electrical devices including such electrodes.

The invention also includes methods of making the protected electrode articles and methods (especially automated methods) of making an electrical device incorporating the protected electrode articles. The latter method may include the steps of making the protected electrode article as described above, and of bringing the article into contact with an electrolyte liquid and allowing the liquid to permeate the layer of polymeric material in order to make contact with the electrode material. Preferably the electrode article will be fed to apparatus which assembles portions of the article into a plurality of devices, preferably automatically, and when the article has the afore-

0143562

mentioned removable layer, the apparatus will preferably carry out the removal thereof, preferably automatically.

Suitable protective materials include polymers,
preferably organic polymers, such as polymers of
compounds with polymerizable double bonds and condensation polymers of condensable compounds.

Useful polymers of compounds with polymerizable
double bonds may be selected from polymers of ethylenically unsaturated hydrocarbons having 2 to 12 carbons,
such as ethylene propylene, n-hexylene, n-dodecene or
4-tert butylstyrene and of vinyl ethers such as methyl
or ethyl vinyl ether. Preferred among these compounds
are polyethylene and polypropylene due to their low
cost.

Copolymers of the above monomeric compounds are
also useful.

Useful condensation polymers may be selected from
self-condensates of omega-amino-fatty acids and their
lactams, such as condensation polymers from caprolactam
and from 11-amino-undecanoic acid.

The condensation polymers can be polyamides of
diamines having 6 to 9 carbons and dicarboxylic acids
having 6 to 10 carbons. Typical useful diamines
include hexamethylenediamine, nonamethylenediamine and
aryldiamines such a m- and p-phenylenediamine. Typical
useful dicarboxylic acids include adipic acid, suberic
acid, azelaic acid, terephthalic acid and isophthalic

0143562

acid. The preferred polyamide is the condensate of hexamethylenediamine and adipic acid, for reasons fo general availability.

The condensation polymers can also be selected from polyesters of aryldicarboxylic acids such as phthalic, terephthalic and isophthalic acids and glycols having 2 to 6 carbons, such as ethylene, butylene and hexyleneglycols.

Useful solid polymeric compositions include ehtylene/tetrrafluoroethylene copolymers ("Tefzel" Trade Mark), ethylene/chlorotrifluoroethylene copolymers, poly(2-methylpropene), polypropylene, polyethylene, poly (4-tert-butylstyrene), poly(vinyl methyl ether), poly (6-aminocaproic acid), poly(11-aminounphthalic, decanoic acid), poly(ethyleneterephthalate), poly(decamethylene sebacamide), poly(heptamethylene pimelamide), poly(octamethylene suberamide), poly(nonamethylene azelaamide) and poly(hexamethylene adipamide).

The polymer will preferably be provided as porous film, an example being "Celgard" supplied by Celanese Corporation, which is a microporous film of polypropylene.

The protective material preferably will not interact with the electrode material, although beneficial interactions are not excluded from the invention. Cross-linked protective materials, especially polymers cross-linked by ionising radiation, may have beneficial temperature resistance and other properties.

Examples of the preparation of electrode materials in assembly with the protective polymer layer will now be described to illustrate the invention.

## EXAMPLE 1

A laminate was prepared of lithium foil (as supplied by Foote Mineral Co.) and two layers of microporous polypropylene (Celgard 2400 from Celanese Corporation). The lithium was in tape form 0.25 mm thick and 37 mm wide. The microporous polypropylene was 0.025 mm thick. Lamination was effected by nip rolling lithium tape with two layers of microporous polypropylene at 60°C through a nip of gap 0.25 mm.

Before, during and after lamination the lithium was maintained in a dry environment to prevent deterioration of the lithium metal.

## EXAMPLE 2

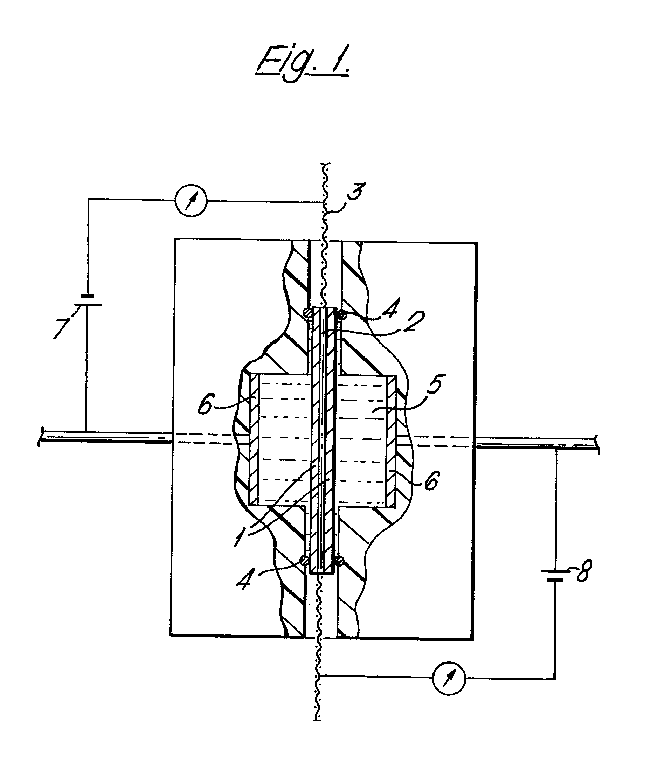

Using a laminate produced as in Example 1 conductivity tests were conducted as follows, referring to the conductivity cell shown schematically in Figure 1 of the accompanying drawings.

A sample of the laminate of Celgard (1) with connections to the lithium (2) made by pieces of nickel mesh (3) was sealed in the conductivity cell by O-rings (4) as shown in the accompanying drawing. The electrolyte 0.5 M $LiCF_3SO_3$ in 50/50 dimethoxyethane/propylene carbonate was added and the conductance of the Celgard measured on both sides of the Lithium using electrodes (6) in conductance bridges (7,8) with the following results, showing adequate conductivity for battery purposes:

Side A      $2 \times 10^{-3}$ ohm$^{-1}$ cm$^{-1}$

Side B      $2.1 \times 10^{-3}$ ohm$^{-1}$ cm$^{-1}$

Example 3

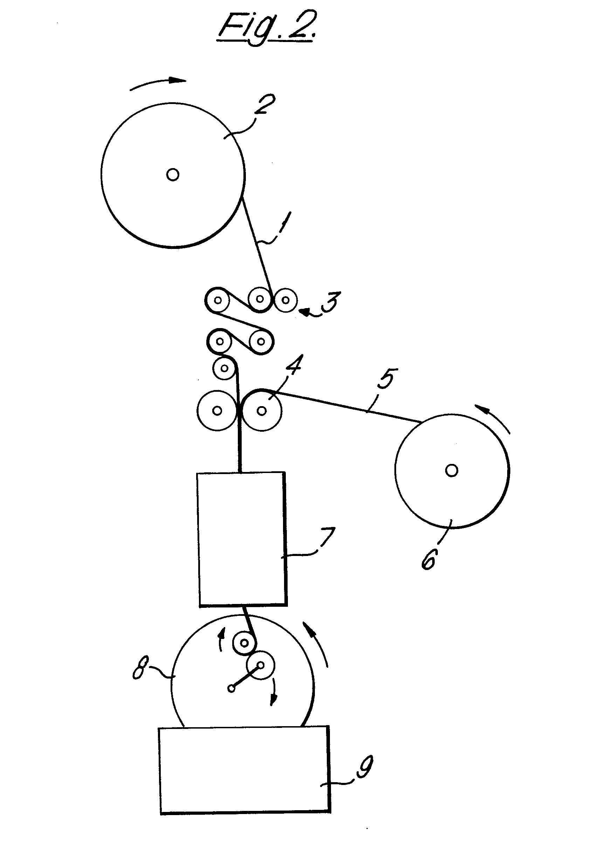

Figure 2 of the accompanying drawings illustrates schematically electrical cell production equipment capable of performing a method of making an electrical device according to this invention.

Referring to Figure 2, a strip (1) of lithium anode material protected by porous polymeric protective material according to the invention is fed from a supply roll (2) via feed rolls (3) to lay-up rolls (4) where a strip (5) of cathode material from feed roll (6) is closely aligned with the protected anode, the porous protective material carried by the lithium anode being between the anode and the cathode. The aligned anode/cathode assembly then proceeds to a spool threading unit (7) and thence to a spool winding unit (8) wherein the assembly is coiled or spooled to provide a coiled electrode assembly. The coiled assembly then passes to the spool casing unit (9), where the coiled assembly is placed in a cell casing together with suitable electrolyte liquid. Suitable practical embodiments of the production equipment thus schematically described can readily be devised.

The electrode article according to this invention may be assembled with a melt extruded cathode material, preferably an electrically conductive composite comprising polymeric material and a suitable cathodic filler, for example polyethylene oxide filled with manganese dioxide. The cathode may be extruded direct ly onto the protected anode material and other components such as current collectors to produce an electrical device.

It may be desirable to cause the cathode, whether extruded or not, to be porous so as to permit access of electrolyte liquid through the cathode to the other components of the device.

CLAIMS

1.    An article comprising continuous metal electrode material having adhered to at least part of its surface a flexible layer of porous protective material wherein the layer is ready to function as an electrode separator when the article is used to provide an electrode in an electrical device, and the article is in a form suitable for feeding to automatic equipment capable of assembling the said device.

2.    An article according to claim 1, wherein the electrode material has been deformed so as to increase its surface area while in contact with the protective material.

3.    An article comprising sensitive electrode material protected by a flexible layer of porous protective material, the electrode material having been deformed so as to increase its surface area while in contact with the protective material and the layer of protective material being ready to function as an electrode separator when the article is used to provide an electrode in an electrical device.

4.    An article according to claim 3, in a form suitable for feeding to automatic equipment capable of assembling the said device.

5.    An article according to claim 3 or 4, wherein the protective material is adhered to the electrode material.

6.     An article according to claim 1 or 4 in the form of an elongate strip of sufficient length to make a plurality of the said devices.

7.     An article according to any of the preceding claims, wherein the protective material comprises cross-linked organic material.

8.     An article according to any of the preceding claims, incorporating at least one additional material capable of functioning as another component of the said electrical device in addition to the electrode material and the protective material.

9.     An article according to claim 8, wherein the additional material is capable of functioning as a current collector when the article is used as aforesaid.

10.     An article according to any of the preceding claims, wherein the electrode material is a reactive metal.

11.     An article according to claim 10, wherein the reactive metal is an alkali metal or an alkaline earth metal.

12.     An article according to claim 11, wherein the reactive metal is lithium.

13.     An article according to any of the preceding claims, wherein the electrode material has been deformed so as to decrease its thickness while in contact with the protective material.

14.    An article according to any of the preceding claims, wherein the electrode material is less than 0.25 millimetres, preferably less than 0.125 millimetres, thick.

15.    An article according to any of the preceding claims, wherein the protective material has been deformed while in contact with the electrode material so as to enhance its function as an electrode separator.

16.    An article according to any of the preceding claims, wherein the protective material is overlaid by a removable substantially non-porous further layer of material.

17.    An electrode for an electrical device formed from an article according to any of the preceding claims.

18.    An electrical device incorporating an electrode according to claim 17.

19.    A method of preparing an article according to any of claims 1 to 16, comprising adhering together an elongate strip of the electrode material and a layer of the protective material prior to or during assembly thereof into an electrical device.

20.    A method according to claim 19, wherein the electrode material is deformed so as to increase its surface area while in contact with the protective material.

21.    A method according to claim 19 or 20, wherein the protective material is melt extruded onto the surface of the electrode material.

22.    A method according to claim 19 or 20, wherein the protective material is pressure laminated onto the electrode material.

23.    A method according to any of claims 19 to 22 including the step of deforming the protective material while in contact with the electrode material so as to enhance its function as an electrode separator.

24.    A method of making an electrical device comprising providing an article according to any of claims 1 to 16, and incorporating at least part of the article in the device so that the electrode material of the article will be capable of functioning as an electrode and the protective material of the article will be capable of functioning as an electrode separator.

25.    A method according to claim 24, including the preparation of the said article by a method according to any of claims 19 to 23.

26.    A method according to claim 24 or 25, wherein the article includes a further removable layer according to claim 14 and the method includes the step of removing the removable layer.

112

_Fig. 1._

_Fig.2._

European Patent Office

**EUROPEAN SEARCH REPORT**

. Application number

EP 84 30 7536

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, Vol.6, No.226(E-141)(1104), November 11, 1982, <br><br> & JP-A-57 128 463 (MATSUSHITA DENKI SANGYO K.K.) (10-8-1982) <br><br> --- | 1-6, 8-13, 15, 17-20, 22-25 | H 01 M 4/02 <br> H 01 M 6/14 <br> H 01 M 6/10 <br> H 01 M 2/14 |
| X | FR-A-1 292 298 (SOCIÉTÉ DES ACCUMULATEURS FIXES ET DE TRACTION) <br><br> * Page 2, left-hand column, lines 40-49; right-hand column, lines 7-32; figures 1-4 * <br><br> --- | 1,4,5, 10, 17-19, 24,25 | |
| A | PATENTS ABSTRACTS OF JAPAN, Vol.6, No.251,(E-147)(1129), December 10, 1982. <br><br> & JP-A-57 151 169 (CITIZEN TOKEI K.K.) (18-9-1982) <br><br> --- | 1-3, 5, 10-20, 22-25 | **TECHNICAL FIELDS SEARCHED (Int. Cl.4)** <br><br> H 01 M 4 <br> H 01 M 6 <br> H 01 M 10 |
| A | PATENTS ABSTRACTS OF JAPAN, Vol.6, No.226, (E-141)(1104) November 11, 1982. <br><br> & JP-A-57 128 467 (MATSUSHITA DENKI SANGYO K.K.)(10-8-1982) <br><br> --- | 1 | |
| A | DE-A-2 834 485 (RHEINISCH-WEST-FÄLISCHES ELEKTRIZITÄTSWERK) <br><br> * Example 1 *      ---      -/- | 1 | |

The present search report has been drawn up for all claims

| Place of search | Date of completion of the search | Examiner |
|---|---|---|
| THE HAGUE | 20-02-1985 | D'HONDT J. |

**European Patent Office**

**EUROPEAN SEARCH REPORT**

. Application number

EP 84 30 7536

Page 2

| | DOCUMENTS CONSIDERED TO BE RELEVANT | | |
|---|---|---|---|
| Category | Citation of document with indication. where appropriate, of relevant passages | Relevant to claim | CLASSIFICATION OF THE APPLICATION (Int. Cl.4) |
| A | FR-A-1 555 186 (TEXAS INSTRUMENTS INCORP.) <br><br> ----- | | |
| | | | **TECHNICAL FIELDS SEARCHED (Int. Cl.4)** |
| | The present search report has been drawn up for all claims | | |

| Place of search | Date of completion of the search | Examiner |
|---|---|---|
| THE HAGUE | 20-02-1985 | D'HONDT J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82